# EUROPEAN PATENT SPECIFICATION

(11) **EP 3 742 293 B1**
(45) Date of publication and mention of the grant of the patent: **06.11.2024**
(21) Application number: 18905106.3
(22) Date of filing: 29.12.2018
(51) Int. Cl.: G06F 9/50, G06F 9/54, G06F 9/48

(54) **EVENT DRIVING METHOD AND DEVICE**
VERFAHREN UND VORRICHTUNG ZUR EREIGNISSTEUERUNG
PROCÉDÉ ET DISPOSITIF DE CONDUITE D'ÉVÉNEMENT

(30) Priority: 12.02.2018 CN 201810153094
(43) Date of publication of application: 25.11.2020
(60) Divisional application: 24200956.1
(73) Proprietor: HUAWEI TECHNOLOGIES CO., LTD., Shenzhen, Guangdong 518129 (CN)
(72) Inventor: YAN, Wei, Shenzhen, Guangdong 518129 (CN); LING, Wei, Shenzhen, Guangdong 518129 (CN)
(74) Representative: Thun, Clemens
(86) International application number: PCT/CN2018/125823
(87) International publication number: WO 2019/153973

(56) References cited:
- WO-A1-2016/190912
- CN-A- 101 582 916
- CN-A- 106 681 834
- US-A1- 2017 024 717
- US-A1- 2017 160 963
- US-A1- 2017 346 704
- US-B2- 9 417 938
- MENGTING YAN ET AL: "Building a Chatbot with Serverless Computing", MASHUPS OF THINGS AND APIS, ACM, 2 PENN PLAZA, SUITE 701 NEW YORK NY 10121-0701 USA, 12 December 2016 (2016-12-12), pages 1 - 4, XP058307779, ISBN: 978-1-4503-4669-6, DOI: 10.1145/3007203.3007217

## Description

### TECHNICAL FIELD

This application relates to the field of cloud computing technologies, and in particular, to an event driving method and apparatus.

### BACKGROUND

A serverless (Serverless) architecture is a latest emerging service software platform architecture. On a platform provided by the serverless architecture, a developer can submit functions that are used to implement a specific service. Execution of these functions may be triggered by using an event. In this way, the developer does not need to set or manage a background device, and may focus on only a service logic design of the function. Basic features of the serverless architecture are function as a service (Function as a Service, FaaS) and event driving. The FaaS refers to the abstraction of functions as a service provided to developers to enable the development, testing and online deployment of functions over the Internet. The event driving means that execution of a function in the serverless architecture is driven by an event. Published by an event source, the event is essentially a service request and is used to request to complete a corresponding service.

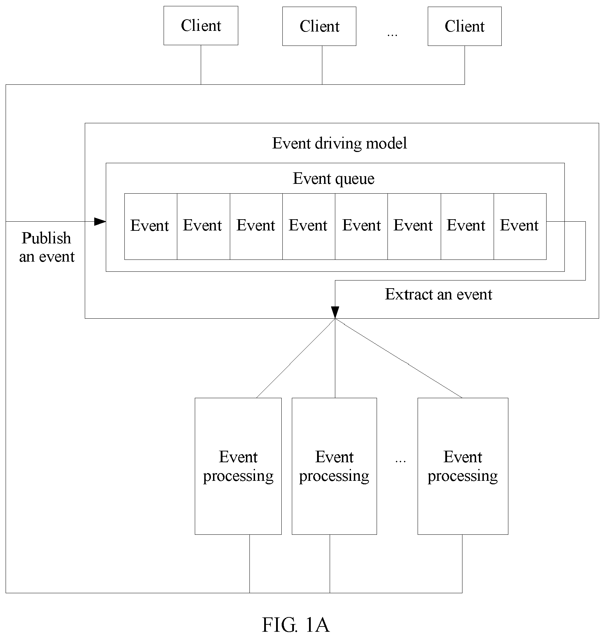

In the current serverless architecture, a general-purpose event driving model is usually used to drive execution of a function. This event driving model is implemented based on a queue. Specifically, referring to FIG 1A, in the serverless architecture, an event source may publish events, and each of the events may trigger one or more functions. The event source includes a client and an event processing process. For example, an operation performed by a user on the client may trigger the client to publish an event, or publication of a new event may be triggered in the event processing process. The events published by the event source may be cached in an event queue by using the event driving model according to a sequence of publication time, or may be sequentially extracted from an event queue based on an event processing progress, and an extracted event is processed. The extracted event may be processed as follows: A function triggered by the event is determined based on a stored trigger relationship between an event and a function, and the function triggered by the event is executed, so as to complete a service requested by the event. In addition, in a process of executing the function triggered by the event, a new event may be further triggered. The new triggered event needs to be first cached in the event queue, for ease of subsequent scheduling and execution.

In the event driving process, a function corresponding to an event needs to be executed only after steps such as enqueuing, waiting in a queue, and dequeuing of the event are completed. Therefore, it takes more time to execute the function, and a latency of a service processing procedure is relatively large.
The document US 2017/0346704 A1 shows a method for controlling on-demand service provisioning using a server-based architecture.
The document Mengting Yan et al.: "Building a chatbot with serverless computing" XP058307779 shows the construction of a chatbot using a server-less architecture.
The document US 9,417,938 B2 shows event handling in remote procedure call chains using a server-based architecture.

### SUMMARY

To resolve a problem of long execution time of a function and a large latency of a service processing procedure in a related technology, this application provides an event driving method and apparatus as defined by independent claims 1 and 7, respectively.

According to a first aspect, an event driving method is provided, and is applied to a serverless architecture, where a plurality of services are deployed in the serverless architecture, each service includes at least one function chain, each function chain is used to indicate a plurality of functions that are sequentially triggered, and each function chain is pre-determined based on a trigger relationship between an event and a function, and the method includes:
receiving a target event that is for a target service and that is published by an event source, where the target service is any one of the plurality of services, and the event source is a client or another service in the plurality of services except the target service;
determining, from at least one function chain included in the target service, a target function chain corresponding to the target event; and
executing, by using the target service, a plurality of functions that are sequentially triggered and that are indicated by the target function chain, to complete driving the target event.

In this embodiment of this application, the plurality of services may be deployed in the serverless architecture. Each service includes at least one function chain. Each function chain is used to indicate a plurality of functions that are sequentially triggered. When the target event that is for the target service and that is published by the event source is received, the target function chain corresponding to the target event may be determined from the at least one function chain included in the target service, and then the plurality of functions that are sequentially triggered and that are indicated by the target function chain are executed by using the target service, to complete driving the target event. In other words, in the serverless architecture provided in this application, an event may directly trigger an entire function chain by using a service, so that driving is performed in a form of a function chain, thereby avoiding a queue procedure of an intermediate event that is triggered when driving is performed in a form of a function, reducing execution duration of a function, shortening a latency of a service processing procedure, and improving system performance.

In another embodiment, before the determining, from at least one function chain included in the target service, a target function chain corresponding to the target event, the method further includes:
obtaining a plurality of functions, a plurality of events, and an event-function relationship diagram, where the event-function relationship diagram is used to indicate a trigger relationship between the obtained plurality of functions and the obtained plurality of events;
determining, based on an affinity relationship between the obtained plurality of functions, a plurality of specified functions that meet an affinity condition in the obtained plurality of functions; and
allocating, to the target service, at least one function chain that is formed by using identifiers of the plurality of specified functions based on the event-function relationship diagram.

In this embodiment of this application, the at least one function chain that is formed, based on a trigger relationship between a function and an event, by using the identifiers of the plurality of functions that meet the affinity condition may be allocated to a service, in other words, the function chain formed by using the plurality of functions that meet the affinity condition may be classified into one service, so that each service includes at least one function chain, the function chain is managed by using the service, scheduling in a form of a function chain may be subsequently performed by using the service, thereby implementing queue-free event driving, and improving system performance.

In a specific embodiment, the target event carries an identifier of the target event; and
the determining, from at least one function chain included in the target service, a target function chain corresponding to the target event includes:
determining, based on the identifier of the target event and a stored trigger relationship between an event and a function, a target function triggered by the target event; determining, from the at least one function chain included in the target service, a function chain starting from the target function; and determining the function chain starting from the target function as the target function chain; or
determining, based on the identifier of the target event and a stored correspondence between an event identifier and a function chain, the target function chain corresponding to the target event from the at least one function chain included in the target service.

In a specific embodiment, the executing, by using the target service, a plurality of functions that are sequentially triggered and that are indicated by the target function chain includes:
determining a target service instance from at least one service instance configured for the target service, where each of the at least one service instance is used to run the target service; and
executing, in the target service instance, the plurality of functions that are sequentially triggered and that are indicated by the target function chain.

In this embodiment of this application, each service may have one or more service instances, each service instance is equivalent to a process of the service, and multi-process running of the service may be implemented by using the plurality of service instances, thereby improving event concurrency.

In a specific embodiment, the target event carries the identifier of the target event, the target service instance includes an event executor, and the event executor is used to execute a function chain; and
the executing, in the target service instance, the plurality of functions that are sequentially triggered and that are indicated by the target function chain includes:
loading the target function chain into the target service instance;
writing the identifier of the target event into the event executor;
executing, by using the event executor based on the identifier of the target event and the target function chain loaded into the target service instance, a function triggered by the target event; and
when it is detected that a new event is published after the function triggered by the target event is executed by using the event executor, updating the identifier of the target event that is written into the event executor to an identifier of the new event, and executing, by using the event executor based on the identifier of the new event and the target function chain loaded into the target service instance, a function triggered by the new event, until all functions included in the target function chain are executed by using the event executor.

In a service instance, a function chain may be executed by using an event executor of the service instance. The event executor includes an event identifier variable. In a process of executing the function chain by using the event executor, if the new event is published, the event executor may be triggered, by updating the event identifier variable, to execute the function triggered by the new event. The function chain is executed by updating the event identifier variable of the event executor, thereby avoiding a queue process of an intermediate event, reducing an execution latency of the event, and improving system performance.

In a specific embodiment, the target function chain includes pointers of the plurality of functions that are sequentially triggered, and the pointers are used to indicate storage addresses of the plurality of functions that are sequentially triggered; and
the executing, by using the event executor based on the identifier of the target event and the target function chain loaded into the target service instance, a function triggered by the target event includes:
obtaining, based on the identifier of the target event from the pointers of the plurality of functions that are sequentially triggered and that are included in the target function chain, a pointer of the function triggered by the target event; and
executing, by using the event executor based on the pointer of the function triggered by the target event, the function triggered by the target event.

In a specific embodiment, the executing, by using the event executor based on the pointer of the function triggered by the target event, the function triggered by the target event includes:
when the target event can trigger one function, determining, based on a pointer of the obtained function, a storage address of the function triggered by the target event; obtaining, from the storage address, the function triggered by the target event; and executing, by using the event executor, the function triggered by the target event; or
when the target event can trigger a plurality of functions, pushing pointers of the obtained plurality of functions into a preset stack; and sequentially executing, by using the event executor based on a popping sequence of the pointers that are of the plurality of functions and that are pushed into the stack, the plurality of functions triggered by the target event.

In this embodiment of this application, when one event can trigger the plurality of functions, the pointers of the plurality of functions are pushed into the preset stack, so that the plurality of functions triggered by the target event are sequentially executed by using the event executor based on the popping sequence of the pointers of the plurality of functions. Therefore, an execution sequence of the plurality of functions may be ensured by using a stack, to avoid unordered scheduling of the function.

In a specific embodiment, the target event carries an identifier of a session to which the target event belongs, and
the determining a target service instance from at least one service instance configured for the target service includes:
determining, based on the identifier of the session from the at least one service instance, a service instance that has executed a function triggered by an event belonging to the session; and
determining, as the target service instance, the service instance that has executed the function triggered by the event belonging to the session.

In this embodiment of this application, events belonging to a same session are scheduled in a same service instance for processing, so that serial execution of events in a session may be ensured, serial and parallel coordination of session events may be implemented, and system performance is further improved.

According to a second aspect, an event driving apparatus is provided, and the event driving apparatus has a functionality of implementing behavior of the event driving method in the first aspect. The event driving apparatus includes at least one module, and the at least one module is configured to implement the event driving method provided in the first aspect.

According to a third aspect, an event driving apparatus is provided, a structure of the event driving apparatus includes a processor and a memory, and the memory is configured to store a program for supporting the event driving apparatus in performing the event driving method provided in the first aspect, and store data used to implement the event driving method provided in the first aspect. The processor is configured to execute the program stored in the memory. The event driving apparatus may further include a communications bus, and the communications bus is configured to establish a connection between the processor and the memory.

According to a fourth aspect, a computer-readable storage medium is provided. The computer-readable storage medium stores an instruction. When the instruction is run on a computer, the computer executes the event driving method in the first aspect.

According to a fifth aspect, a computer program product that includes an instruction is provided. When the instruction is run on a computer, the computer executes the event driving method in the first aspect.

Technical effects achieved in the second aspect, the third aspect, the fourth aspect, and the fifth aspect are similar to those achieved by corresponding technical means in the first aspect. Details are not described again herein.

The technical solutions provided in this application bring the following beneficial effects:
In this embodiment of this application, the plurality of services may be deployed in the serverless architecture. Each service includes at least one function chain. Each function chain is used to indicate a plurality of functions that are sequentially triggered. When the target event that is for the target service and that is published by the event source is received, the target function chain corresponding to the target event may be determined from at least one function chain included in the target service, and then the plurality of functions that are sequentially triggered and that are indicated by the target function chain are executed by using the target service, to complete driving the target event. In other words, in the serverless architecture provided in this application, an event may directly trigger an entire function chain by using a service, so that driving is performed in a form of a function chain, thereby avoiding a queue procedure of an intermediate event that is triggered when driving is performed in a form of a function, reducing execution duration of a function, shortening a latency of a service processing procedure, and improving system performance.

### DESCRIPTION OF DRAWINGS

FIG 1A is a schematic diagram of an event driving method according to a related technology;
FIG 1B is a schematic diagram of a serverless architecture according to an embodiment of this application;
FIG 1C is a schematic diagram of another serverless architecture according to an embodiment of this application;
FIG 1D is a schematic diagram of a serverless architecture of a wireless transmission service according to an embodiment of this application;
FIG 1E is a flowchart of an event driving method according to an embodiment of this application;
FIG 1F is a schematic diagram of a logical structure of an IDE 10 according to an embodiment of this application;
FIG 1G is a schematic diagram of a function chain according to an embodiment of this application;
FIG 1H is a schematic running diagram of an SRE 20 according to an embodiment of this application;
FIG 1I is a schematic diagram of improving concurrency by extending a queue according to a related technology;
FIG 1J is a schematic diagram of a function chain according to an embodiment of this application;
FIG 1K is a schematic diagram of a process of pushing into a stack according to an embodiment of this application;
FIG 1L is a schematic flowchart of executing a function chain by using an event executor according to an embodiment of this application;
FIG 1M is a schematic diagram of scheduling a session event by using a target service according to an embodiment of this application;
FIG 1N is a diagram of a deployment relationship of a service instance according to an embodiment of this application; and
FIG 2 is a schematic structural diagram of an event driving apparatus according to an embodiment of this application.

### DESCRIPTION OF EMBODIMENTS

To make the objectives, technical solutions, and advantages of this application clearer, the following further describes the implementations of this application in detail with reference to the accompanying drawings.

Before the embodiments of this application are described in detail, an application scenario of the embodiments of this application is first briefly described.

A serverless architecture provided in the embodiments of this application is used to provide various services for a user. For example, the serverless architecture may be a cloud service for a public user, and is used to provide an Internet access service, an online shopping service, a voice communication service, or the like for the user.

A system architecture in the embodiments of this application is described in the following.

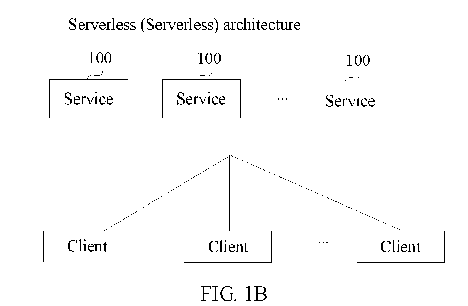

FIG 1B is a schematic diagram of a serverless architecture according to an embodiment of this application. As shown in FIG 1B, a plurality of services (Service) 100 are deployed in the serverless architecture, each service 100 includes at least one function chain, each function chain is used to indicate a plurality of functions (Function) that can be sequentially triggered, and each function chain is pre-determined based on a trigger relationship between an event (Event) and a function. In addition, the serverless architecture further includes a background device that is used to support the plurality of services 100. Because an application for a developer is mainly focused on in this embodiment of this application, the background device is not described in detail.

The function chain of each service 100 may be triggered by an event, the event is published by an event source, and the event source includes a client and the service 100. In other words, the event may be exchanged between the client and the service 100, or may be exchanged between the services 100.

Specifically, the serverless architecture may pre-obtain a plurality of functions, a plurality of events, and an event-function relationship diagram, and then allocate, to one service 100, at least one function chain that is formed, based on the event-function relationship diagram, by using identifiers of a plurality of specified functions that meet an affinity condition based on an affinity relationship between the obtained plurality of functions, so that each service 100 includes the at least one function chain. The event-function relationship diagram is used to indicate a trigger relationship between the obtained plurality of functions and the obtained plurality of events, and the affinity relationship is used to indicate correlation and similarity of the functions.

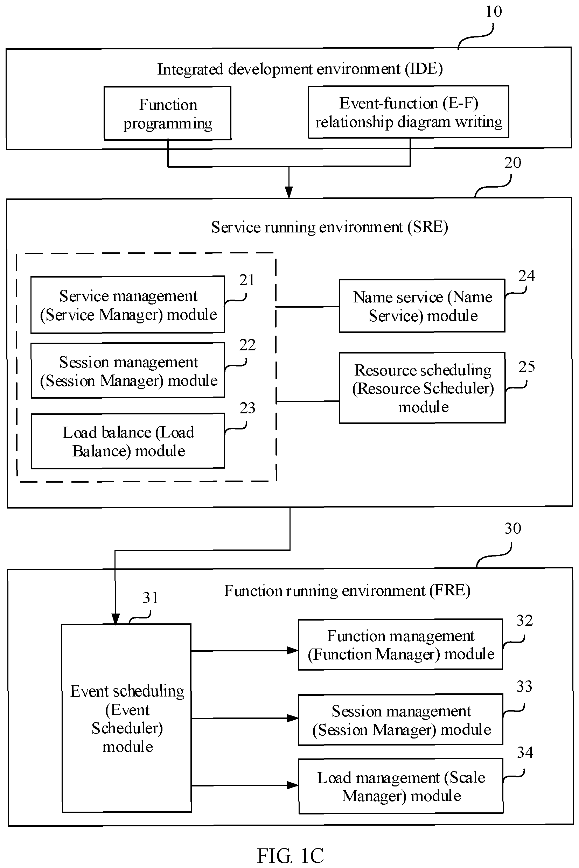

FIG 1C is a schematic diagram of another serverless architecture according to an embodiment of this application. As shown in FIG 1C, the serverless architecture includes an integrated development environment (Integrated Development Environment, IDE) 10, a service running environment (Service Running Environment, SRE) 20, and a function running environment (Function Running Environment, FRE) 30.

The IDE 10 is used to provide a programming development framework, so that a developer may pre-program a function chain in the programming development framework. Specifically, the developer may program a function, define an event, and write an event-function (Event-Function, E-F) relationship diagram in the IDE 10, to submit a plurality of functions, a plurality of events, and the E-F relationship diagram to the serverless architecture through the integrated development environment.

The SRE 20 is used to allocate function chains to a plurality of services, to manage the plurality of services. Specifically, the SRE 20 may separately allocate, to a service based on the plurality of functions, the plurality of events, and the E-F relationship diagram that are submitted by the IDE 10, at least one function chain formed by using a plurality of specified functions that meet an affinity condition in the plurality of functions, so that each of the plurality of services includes at least one function chain, and manages the function chain by using the service.

Specifically, the SRE 20 includes a service manager (Service Manager) module 21, a session manager (Session Manager) module 22, a load balance (Load Balance) module 23, a name service (Name Service) module 24, and a resource scheduler (Resource Scheduler) module 25.

The Service Manager module 21 is configured to allocate a function chain to a service, and manage a running status of the service. The running status of the service includes a start state, a loading state, an end state, and the like.

The Session Manager module 22 is configured to perform session classification on an event that enters a service, record a session status, and the like. The session classification is to determine a session to which the event that performs the service belongs.

The Load Balance module 23 is configured to ensure load balancing between service instances of each service. A plurality of service instances are usually configured for each service, and each service instance is used to run a corresponding service.

The Name Service module 24 is configured to implement service registration, deregistration, status storage, or the like.

The Resource Scheduler module 25 is configured to allocate a resource to a service instance of each service, so as to run the corresponding service instance by using the allocated resource.

The FRE 30 is used to load a function chain into a service instance, and trigger execution of the function chain based on a transferred event. The function chain loaded into the service instance is a function chain included in a corresponding service. Specifically, the FRE 30 includes an event scheduling (Event Scheduler) module 31, a function manager (Function Manager) module 32, a session manager (Session Manager) module 33, and a scale manager (Scale Manager) module 34.

The Event Scheduler module 31 is configured to schedule loading and execution of the function chain based on the event that is transferred into the service instance.

The Function Manager module 32 is configured to manage and load the function chain.

The Session Manager module 33 is configured to allocate, based on a session to which the transferred event belongs, the event to a thread corresponding to the session to which the event belongs for processing.

The Scale Manager module 34 is configured to dynamically adjust a quantity of executed threads in the service instance based on a size of load of the service instance, and report information to the SRE when the service instance is overloaded, so as to trigger the SRE to adjust a quantity of service instances configured for the service.

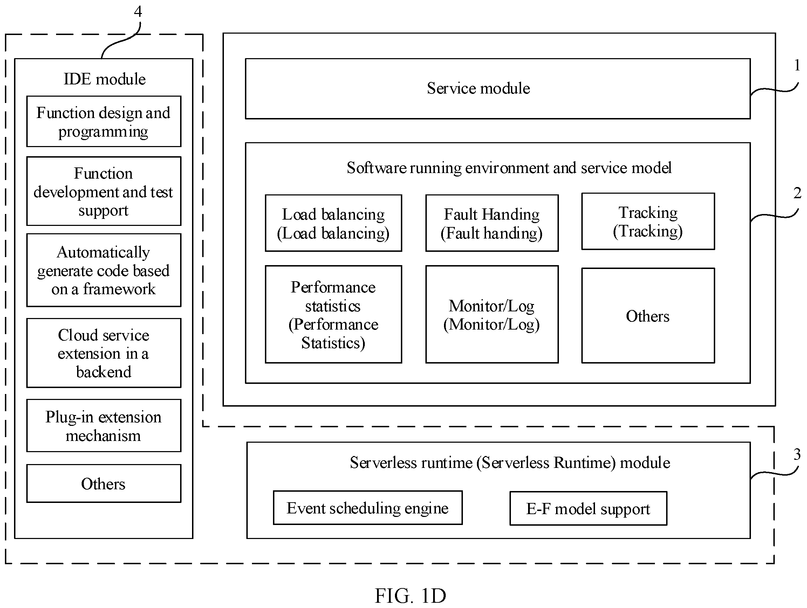

FIG 1D is a schematic diagram of a serverless architecture of a service according to an embodiment of this application. As shown in FIG 1D, the serverless architecture includes a service module 1, a software running environment and service model 2, a serverless runtime (Serverless Runtime) module 3, and an IDE module 4.

The service module 1 is mainly configured to reform the serverless architecture, and separate and reform specific service code.

The software running environment and service model 2 is mainly configured to construct a software running environment and service.

The Serverless Runtime module 3 is mainly configured to invoke an event, execute a function chain, and the like.

The IDE module 4 is mainly configured to program a function, write an E-F relationship diagram, and the like.

For the service module 1 and the software running environment and service model 2 in a solid-line block, refer to an existing serverless architecture. The Serverless Runtime module 3 and the IDE module 4 in a solid-line block are provided in this application.

A person skilled in the art may understand that the serverless architecture shown in FIG 1C or FIG 1D does not constitute a limitation on the serverless architecture. In actual application, the serverless architecture may include more or fewer modules than those shown in the figure, or combine some modules, or include different component modules. This is not limited in this embodiment of this application.

The following describes in detail an event driving method provided in the embodiments of this application.

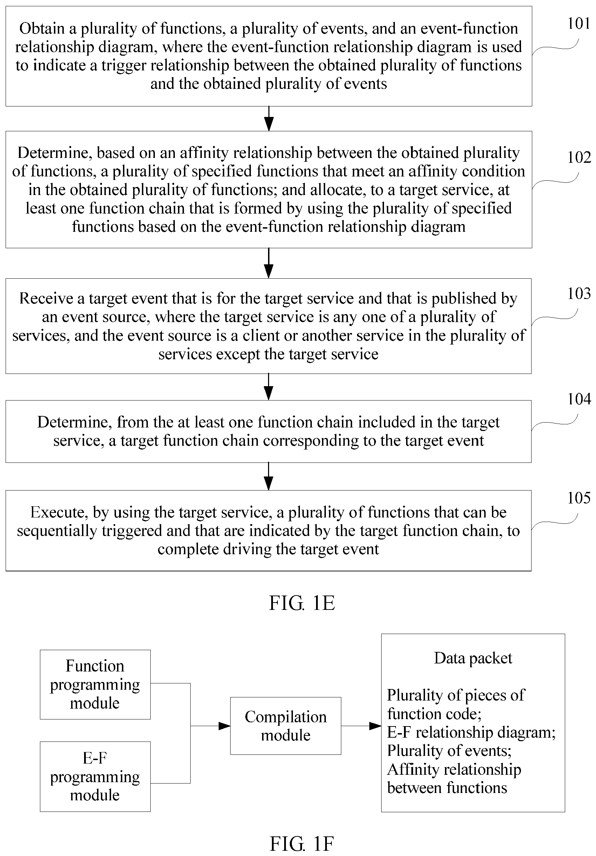

FIG 1E is a flowchart of an event driving method according to an embodiment of this application. The method is applied to the serverless architecture described in FIG 1B or FIG 1C. A plurality of services are deployed in the serverless architecture, each service includes at least one function chain, each function chain is used to indicate a plurality of functions that can be sequentially triggered, and each function chain is pre-determined based on a trigger relationship between an event and a function. As shown in FIG 1E, the method includes the following steps.

Step 101: Obtain a plurality of functions, a plurality of events, and an event-function relationship diagram, where the event-function relationship diagram is used to indicate a trigger relationship between the obtained plurality of functions and the obtained plurality of events.

Each of the plurality of functions is a service processing function, and is used to implement specific service logic. Each of the plurality of events is essentially a service request, and is used to request to implement a specific service. In addition, there is a specific trigger relationship between an event and a function. One event may trigger one or more functions, and one function may also trigger a new event.

Function code of the plurality of functions may be pre-programmed by a developer, to define functionalities of the plurality of functions. The plurality of events may be predefined by the developer, to define a meaning of each event. The event-function relationship diagram may also be pre-written by the developer, to define a trigger relationship between the plurality of functions and the plurality of events. The serverless architecture in this embodiment of this application may provide an IDE for the developer, and the developer programs a function, defines an event, and writes an event-function relationship diagram in the IDE.

In an embodiment, an IDE programming framework may be designed in the serverless architecture, and the IDE programming framework is used to define programming behavior of a user. For example, a development role of a system may be classified into three types based on the IDE programming framework: a software (Software, SWE) engineer, a system/module (System/Module, SE/MDE) engineer, and a platform developer. Tasks of the SWE and the SE/MDE are to develop a service, and a task of the platform developer is to develop a platform.

The task of the SWE is to write function code of a function by using the IDE programming framework. The task of the SE/MDE is to define an event of an entire system, divide a service system, and write the E-F relationship diagram by using the IDE programming framework. Further, the task of the SE/MDE further includes defining an affinity relationship between functions by using the programming framework, and the affinity relationship is used to indicate correlation and similarity between the functions, so as to subsequently determine to classify which functions into one service based on the affinity relationship between the functions. The task of the platform developer is to develop a FaaS platform, so that the FaaS platform can obtain the function, the event, and the E-F relationship diagram that are written by the SE/MDE, and can parse the E-F relationship diagram, schedule an actual physical resource, and process and serve a transaction that is the same as that in a distributed system. It should be noted that all complex distributed scheduling is hidden in the FaaS platform, and is invisible to the developer, to be specific, the developer does not sense all complex functionalities such as distribution, cluster, resource scheduling, and dynamic scaling, thereby reducing a processing burden of the developer.

Further, the IDE programming framework may further compile, into an SO file, the function written by the SE/MDE, and write the E-F relationship diagram into a JSON file. Specifically, one function may be compiled into one SO file, or a plurality of functions may be compiled into one SO file. This is not limited in this embodiment of this application. Correspondingly, the FaaS platform may directly obtain the compiled SO file and JSON file, and parse the SO file and the JSON file, to obtain the plurality of functions and the E-F relationship diagram.

In a specific embodiment, referring to FIG 1F, the serverless architecture may provide an IDE 10 for the developer, and the IDE 10 may include a function programming module, an E-F programming module, and a compilation module. The function programming module is configured to obtain the function code written by the developer. The E-F programming module is configured to obtain the E-F relationship diagram written by the developer, the event defined by the developer, and the affinity relationship between the functions that is defined by the developer. The compilation module is configured to compile the obtained function code, the obtained E-F relationship diagram, the defined event, and the defined affinity relationship between the functions, to obtain a data packet, and output the data packet. The data packet may include a plurality of pieces of function code, the E-F relationship diagram, the plurality of events, and the affinity relationship between the functions. In actual application, the foregoing module may be implemented by using a plug-in developed by a development tool.

Step 102: Determine, based on an affinity relationship between the obtained plurality of functions, a plurality of specified functions that meet an affinity condition in the obtained plurality of functions; and allocate, to a target service, at least one function chain that is formed by using the plurality of specified functions based on the event-function relationship diagram.

The affinity relationship is used to indicate association between functions, and the affinity condition is a condition that needs to be meet by an affinity relationship between a plurality of functions that can be allocated to one service. Specifically, the affinity relationship may be used to indicate association between services implemented by the functions, and the affinity condition may be that association between services implemented by the plurality of specified functions is greater than a preset threshold. Certainly, the affinity relationship may be alternatively set by the developer based on a specific requirement. This is not limited in this embodiment of this application.

The target service is any one of the plurality of services deployed in the serverless architecture. In other words, each of the plurality of services includes at least one function chain, and each function chain is used to indicate the plurality of functions that can be sequentially triggered.

After the plurality of functions are obtained, the serverless architecture may classify some functions that meet the affinity condition into one service, to manage the functions by using the same service. The at least one function chain may be formed, based on the event-function relationship diagram, by using identifiers of the plurality of specified functions that meet the affinity condition, or may be formed, based on the event-function relationship diagram, by using identifiers of the plurality of specified functions that meet the affinity condition and an identifier of at least one event triggered by the plurality of specified functions. The at least one formed function chain is allocated to the target service, so that each of the plurality of services may include at least one function chain, and an affinity relationship between a plurality of functions indicated by the at least one function chain included in each service meets the affinity condition.

Each function chain may include identifiers of the plurality of functions that can be sequentially triggered, or include identifiers of the plurality of functions that can be sequentially triggered and an identifier of at least one event. An identifier of a function is used to uniquely identify the function, and may be a name, an identification (Identification, ID), a pointer, or the like of the function. An identifier of an event is used to uniquely identify the event, and may be a name, an ID, or the like of the event.

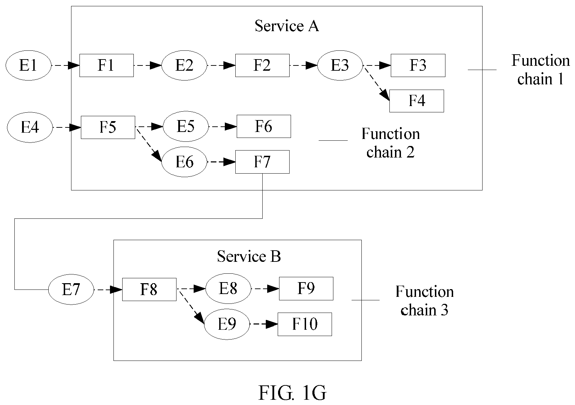

For example, each function chain includes the IDs of a plurality of functions that can be sequentially triggered and an ID of at least one event. As shown in FIG 1G, E represents an event, F represents a function, and a service A includes two function chains: a function chain 1 and a function chain 2, each of which is formed by using a function ID and an event ID, and a service B includes one function chain formed by using a function ID and an event ID. For example, the function chain 1 includes F1, E2, F2, E3, F3, F4, and arrows indicating a trigger relationship. The arrows are used to indicate that F1 can trigger E2, E2 can trigger F2, F2 can trigger E3, and E3 can separately trigger F3 and F4.

In a related technology, a function is in an independent container (Docker), and each function runs independently in a container to which each function belongs. In this embodiment of this application, a plurality of functions indicated by one function chain may be in a same container, and the entire function chain may run in the same container. In this way, a quantity of maintained containers can be reduced, and a high latency caused by frequent loading because one function runs in one container can be avoided, thereby improving system performance. The container is a resource that is allocated to a service and that is used to run the service.

In addition, it should be noted that in the related technology, a function is usually abstracted as a service, and then driving in a form of a function is performed by using an event. In this process, a triggered intermediate event needs to first enter an event queue for queuing. In this way, an execution latency of a function is increased, and system performance is relatively low. In this embodiment of this application, the at least one function chain is formed, based on the event-function relationship diagram, by using the plurality of functions that meet the affinity relationship, and the at least one formed function chain is allocated to a service, so that a string of function chains is abstracted into one service, driving in a form of a function chain is performed by using the service, thereby avoiding a queue procedure for the event, shortening a processing latency of the function, and improving system performance.

It should be noted that step 101 and step 102 are used to configure a function chain for a service deployed in the serverless architecture. After the function chain is configured for the service, scheduling in a form of a function chain may be performed by using the service and based on an event published by an event source, that is, the following steps 103 to 105 are performed. In addition, in actual application, after the function chain is configured for the service, any configured function chain may be further changed as required. This is not limited in this embodiment of this application.

Step 103: Receive a target event that is for the target service and that is published by an event source, where the target service is any one of a plurality of services, and the event source is a client or another service in the plurality of services except the target service.

The target event that is for the target service and that is published by the event source is an event sent by the event source to the target service.

In the serverless architecture, the event source may publish an event for a service, to request the service to serve the event. The event source may be a client or any one of the plurality of services. To be specific, in the serverless architecture, the event may be exchanged between the client and the service, or may be exchanged between services.

In actual application, the event that is exchanged between the client and the service or between the services may be referred to as a message.

Step 104: Determine, from the at least one function chain included in the target service, a target function chain corresponding to the target event.

For the target event that is for the target service and that is published by the event source, the target function chain corresponding to the target event may be directly determined from the at least one function chain included in the target service. The target function chain corresponding to the target event is a function chain that can be triggered by the target event.

Specifically, the target event may carry an identifier of the target event, and the determining, from the at least one function chain included in the target service, a target function chain corresponding to the target event may include the following two implementations.

In a first implementation, a target function triggered by the target event is determined based on the identifier of the target event and a stored trigger relationship between an event and a function; a function chain starting from the target function is determined from the at least one function chain included in the target service; and the function chain starting from the target function is determined as the target function chain.

In this embodiment of this application, each service may pre-store a trigger relationship between an event and a function. The trigger relationship between an event and a function that is stored in each service may include a trigger relationship between all functions and all events in a system, or may include only a trigger relationship between a plurality of functions indicated by a function chain hosted by the service and events, or may include only a trigger relationship between a start function of each function chain hosted by the service and an event.

After the target event for the target service is received, the trigger relationship between an event and a function that is stored in the target service may be obtained, and then the target function chain corresponding to the target event is determined, based on the identifier of the target event and the trigger relationship between an event and a function stored in the target service, from the at least one function chain included in the target service.

The trigger relationship between an event and a function may include identifiers of the plurality of events and identifiers of corresponding functions that can be triggered by the plurality of events. Specifically, the determining, based on the identifier of the target event and a stored trigger relationship between an event and a function, a target function triggered by the target event includes: searching, based on the identifier of the target event, the stored trigger relationship between an event and a function for a function identifier corresponding to the identifier of the target event, and using a function indicated by the function identifier corresponding to the identifier of the target event as the target function.

Each of the at least one function chain included in the target service may include the identifiers of the plurality of functions that can be sequentially triggered. Correspondingly, a function chain starting from the identifier of the target function may be determined from the at least one function chain included in the target service, and the function chain starting from the identifier of the target function is used as the target function chain.

For example, referring to FIG 1F, the target service is the service A, and the identifier of the target event is E1. An identifier F1 of a target function that can be triggered by E1 may be first determined based on the pre-stored trigger relationship between an event and a function, and then the function chain 1 starting from F1 is determined from the two function chains included in the service A as the target function chain.

In a second implementation, based on the identifier of the target event and a stored correspondence between an event identifier and a function chain, a target function chain corresponding to the target event is determined from the at least one function chain included in the target service.

In this embodiment of this application, each service may pre-store a correspondence between an event identifier and a function chain. The correspondence between an event identifier and a function chain stores at least one function chain included in each service and an identifier of an event corresponding to each function chain. The identifier of the event corresponding to each function chain is an identifier of an event that can trigger a start function of the function chain.

Specifically, the at least one function chain included in the target service may be searched for a function chain corresponding to the identifier of the target event based on the identifier of the target event and the stored correspondence between an event identifier and a function chain, and the function chain corresponding to the identifier of the target event is determined as the target function chain corresponding to the target event.

Step 105: Execute, by using the target service, a plurality of functions that can be sequentially triggered and that are indicated by the target function chain, to complete driving the target event.

Specifically, the executing, by using the target service, a plurality of functions that can be sequentially triggered and that are indicated by the target function chain may include: determining a target service instance from at least one service instance configured for the target service, where each of the at least one service instance is used to run the target service; and in the target service instance, executing the plurality of functions that can be sequentially triggered and that are indicated by the target function chain.

In the serverless architecture, each service has one or more service instances, and these service instances are used to run the service, to be specific, each service instance may load and run at least one function chain included in the service. A running resource of a service instance of each service may be pre-allocated by the serverless architecture. Specifically, the running resource may be allocated by default by the serverless architecture according to a preset allocation rule, or may be allocated manually by a person skilled in the art based on an actual requirement.

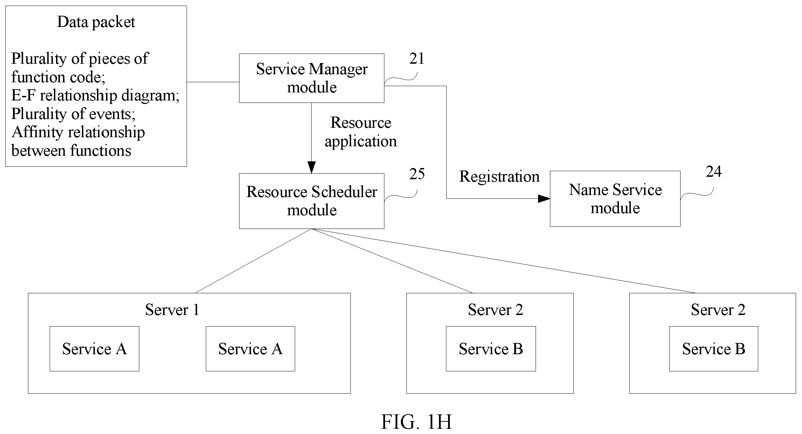

For example, FIG 1H is a schematic running diagram of an SRE 20 according to an embodiment of this application. As shown in FIG 1H, the SRE 20 includes a Service Manager module 21, a Name Service module 24, and a Resource Scheduler module 25.

The service manager module 21 may receive a data packet that is submitted by a developer through an IDE, where the data packet may include a plurality of pieces of function code, an E-F relationship diagram, a plurality of defined events, and a defined affinity relationship between functions; then parse the data packet; and allocate, to a service based on the defined affinity relationship between the functions and the E-F relationship diagram that are obtained through parsing, at least one function chain formed by using a plurality of functions that meet an affinity condition. In other words, the Service Manager module 21 is configured to allocate a function chain to a plurality of services in the serverless architecture. In addition, the Service Manager module 21 may further send a resource application to the Resource Scheduler module 25, to apply for running resources for service instances of the plurality of services.

The Resource Scheduler module 25 is configured to allocate a running resource to a service instance of each service based on the resource application of the Service Manager module 21. For example, two containers may be created in a server 1, and are separately used to run a service A, to obtain two service instances of the service A. A container may be separately created in a server 2 and a server 3, and is used to run a service B, to obtain two service instances of the service B.

In a specific service scenario, there is usually a multi-user concept, such as a session (Session). The session is a session between a plurality of clients, and each session usually includes a series of events. In addition, to ensure a sequence of sessions, events of one session usually need to be processed in a serial manner, and events of different sessions need to be processed in a parallel manner. However, in the serverless architecture in the related technology, because one function is in an independent container, and events are driven in a queue, it is difficult to resolve a cooperative problem of serial and parallel processing of session events in a complex scenario.

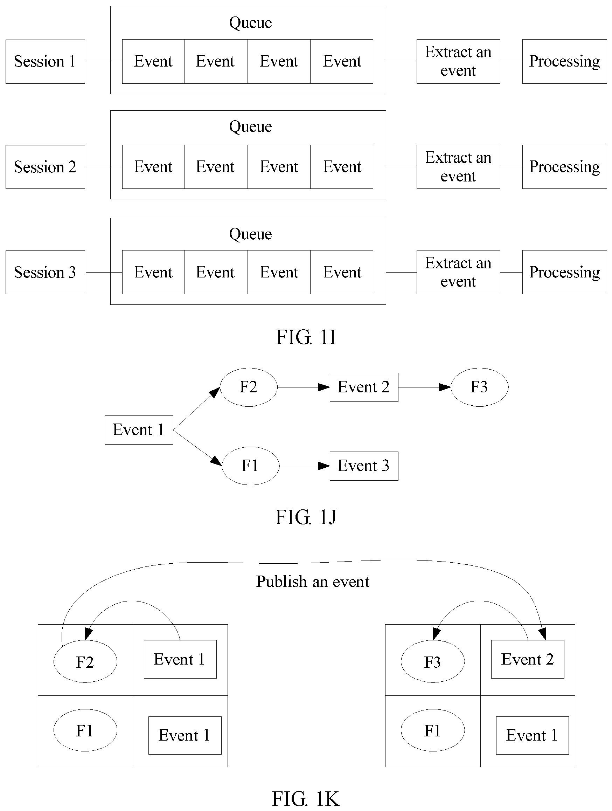

In addition, in the related technology, concurrency is further improved by extending a queue. For example, as shown in FIG 1I, if the serverless architecture includes three sessions: a session 1, a session 2, and a session 3, corresponding queues may be respectively created for the three sessions, and an event generated by each session is placed into a queue corresponding to each session for queuing, so that events of the sessions are processed in a parallel manner. However, in a real system, there are usually millions or even tens of millions of sessions. Therefore, if concurrency is improved by extending a queue, millions or even tens of millions of queues need to be created, and a bottleneck is easily caused in actual implementation.

To resolve the cooperative problem of serial and parallel processing of session events, the serverless architecture provided in this embodiment of this application further supports in executing, in a serial manner, function chains triggered by events of a same session, and in executing, in a parallel manner, function chains triggered by events of different sessions.

Specifically, the target event may further include an identifier of a session to which the target event belongs, and the determining a target service instance from at least one service instance configured for the target service may include: determining, based on the identifier of the session from the at least one service instance, a service instance that has executed a function triggered by an event belonging to the session; and determining, as the target service instance, the service instance that has executed the function triggered by the event belonging to the session. Then, the plurality of functions that can be sequentially triggered and that are indicated by the target function chain may be executed in the target service instance. In this manner, function chains triggered by events belong to a same session may be processed in a same service instance, to implement serial processing of session events.

Further, in this embodiment of this application, each service instance includes an event executor, and the event executor is an execution unit of a function chain, in other words, each service instance may execute the function chain by using the event executor. Each service instance may include one event executor, or may include a plurality of event executors. Each event executor is independent, so that function chains can be processed in a parallel manner. In other words, the event executor is used to execute functions in one function chain in a serial manner and execute functions in different function chains in a parallel manner. In addition, in the serverless architecture provided in this embodiment of this application, a quantity of event executors of each service instance may be increased or decreased based on an actual requirement.

Specifically, the target event carries the identifier of the target event, the target service instance includes the event executor, and the event executor is used to execute a function chain. Correspondingly, in the target service instance, the executing the plurality of functions that can be sequentially triggered and that are indicated by the target function chain may include the following steps 1 to 3.
1. Load the target function chain into the target service instance.
2. Write the identifier of the target event into the event executor of the target service instance, and execute, by using the event executor based on the identifier of the target event and the target function chain loaded into the target service instance, a function triggered by the target event.

The event executor is essentially a function code segment, and the function code segment includes an event identifier variable. In actual implementation, the event executor may be triggered to execute the target function chain by assigning a value to the event identifier variable in the event executor. After the target event is received, the identifier of the target event first needs to be written into the event executor, to trigger the event executor to execute a function triggered by the target event. The writing the identifier of the target event into the event executor is assigning the identifier of the target event to the event identifier variable.

Specifically, the target function chain may include the identifiers of the plurality of functions that can be sequentially triggered, and the executing, by using the event executor based on the identifier of the target event and the target function chain, a function triggered by the target event may include: obtaining, based on the identifier of the target event from identifiers of the plurality of functions that can be sequentially triggered and that are included in the target function chain, an identifier of the function triggered by the target event; and executing, by using the event executor based on the identifier of the function triggered by the target event, the function triggered by the target event.

The identifiers of the plurality of functions that can be sequentially triggered and that are included in the target function chain may be IDs or pointers of the plurality of functions, and are used to indicate storage addresses of the plurality of functions that can be sequentially triggered and that are indicated by the target function chain.

Specifically, the executing, by using the event executor based on the identifier of the function triggered by the target event, the function triggered by the target event may include the following two implementations.

In a first implementation, when the target function chain includes the IDs of the plurality of functions that can be sequentially triggered, an ID of the function triggered by the target event is obtained, based on the identifier of the target event, from the IDs of the plurality of functions that can be sequentially triggered and that are included in the target function chain; a pointer of the function triggered by the target event is determined based on the ID of the function triggered by the target event and a stored correspondence between a function ID and a function pointer; and the function triggered by the target event is executed by using the event executor based on the pointer of the function triggered by the target event.

In a second implementation, when the target function chain includes the pointers of the plurality of functions that can be sequentially triggered, a pointer of the function triggered by the target event is obtained, based on the identifier of the target event, from the pointers of the plurality of functions that can be sequentially triggered and that are included in the target function chain; and the function triggered by the target event is executed, by using the event executor, based on the pointer of the function triggered by the target event.

The executing, by using the event executor based on the pointer of the function triggered by the target event, the function triggered by the target event may include the following two implementations.

In a first implementation, when the target event can trigger one function, the function triggered by the target event is executed by using the event executor based on a pointer of the obtained function.

Specifically, a storage address of the function triggered by the target event may be determined based on the pointer of the obtained function, the function triggered by the target event is obtained from the storage address, and the function triggered by the target event is executed by using the event executor.

In a second implementation, when the target event can trigger a plurality of functions, pointers of the obtained plurality of functions are pushed into a preset stack; and the plurality of functions triggered by the target event are sequentially executed by using the event executor based on a popping sequence of the pointers that are of the plurality of functions and that are pushed into the stack.

The obtained plurality of functions are a plurality of functions that can be triggered by the target event.

Specifically, the sequentially executing, by using the event executor based on a popping sequence of the pointers that are of the plurality of functions and that are pushed into the stack, the plurality of functions triggered by the target event includes the following steps (1) to (3).
(1) A pointer of a first function on a stack top in the pointers that are of the plurality of functions and that are pushed into the stack is popped from the stack, the first function is obtained based on the pointer of the first function, and the first function is executed by using the event executor. When it is detected that a new event is published after a function that is first popped from the stack is executed by using the event executor, the identifier of the target event that is written into the event executor is updated to an identifier of the new event, and a function triggered by the new event is executed by using the event executor based on the identifier of the new event and the target function chain, until a branch, in which the first function is located, in the target function chain is executed by using the event executor.
(2) After the branch, in which the first function is located, in the target function chain is executed by using the event executor, or when it is detected that no new event is published after the first function is executed by using the event executor, a pointer of a second function under the pointer of the first function in the pointers that are of the plurality of functions and that are pushed into the stack is popped from the stack, the second function is obtained based on the pointer of the second function, and the second function is executed by using the event executor in a manner of executing the first function by using the event executor, until a branch, in which the second function is located, in the target function chain is executed by using the event executor.
(3) Step (2) is performed repeatedly until a pointer of a last function on a stack bottom in the pointers that are of the plurality of functions and that are pushed into the stack is popped from the stack, and a branch, in which the last function is located, in the target function chain is executed by using the event executor.

For example, referring to FIG 1J, it is assumed that the target event is an event 1, and the event 1 is subscribed to by two functions (F2 and F1), in other words, the event 1 can trigger the two functions F2 and F1. F2 can trigger a new event 2, the event 2 can trigger a new function F3, and F1 can trigger a new event 3. Referring to FIG 1K, a pointer of F2 and a pointer of F1 may be separately pushed into a preset stack, then the pointer of F2 on a stack top is popped from the stack, and F2 is executed by using the event executor. After F2 is executed, the new event 2 is published, and execution of F3 is triggered based on the event 2. After F3 is executed, the pointer of F1 is popped from the stack, and F1 is executed by using the event executor.

In another embodiment, when the target event can trigger the plurality of functions, one of the plurality of functions may be further processed by using the current event executor, and another function of the plurality of functions is scheduled to another event executor different from the event executor in the target service instance for processing. In this way, asynchronous processing may be performed on the plurality of functions by using a plurality of event executors, so that concurrency is increased.

3. When it is detected that a new event is published after the function triggered by the target event is executed by using the event executor, update the identifier of the target event that is written into the event executor to an identifier of the new event, and execute, by using the event executor based on the identifier of the new event and the target function chain, a function triggered by the new event, until all functions included in the target function chain are executed by using the event executor.

When it is detected that the new event is published after the function triggered by the target event is executed by using the event executor, the carried identifier of the new event may be obtained from the new event, and the identifier of the target event that is written into the event executor is updated to the identifier of the new event, so as to re-assign the identifier of the new event to the event identifier variable in the event executor, and trigger the event executor to execute the function triggered by the new event.

A manner of executing, by using the event executor based on the identifier of the new event and the target function chain, the function triggered by the new event is similar to a manner of executing, by using the event executor based on the identifier of the target event and the target function chain, the function triggered by the target event. For a specific implementation, refer to related descriptions in the foregoing step 2. Details are not described again in this embodiment of this application.

To be specific, in a process of executing the target function chain by using the event executor, if publication of the new event is triggered, the identifier of the event that is written into the event executor may be modified into the identifier of the new event, to trigger execution of the new event. If one event triggers a plurality of functions, the plurality of functions are pushed into a stack, and branches in which the plurality of functions are located are sequentially executed by using the event executor based on a popping sequence of the plurality of functions, or some of the plurality of functions may be scheduled to another event executor for processing.

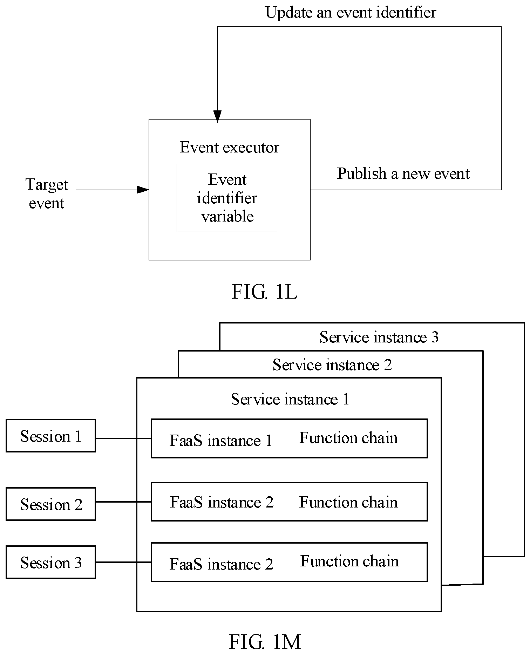

In this embodiment of this application, the event executor is triggered to execute the function chain by modifying the event identifier variable of the event executor. Referring to FIG 1L, the event executor includes the event identifier variable. After an external event enters a service instance to which the event executor belongs, a corresponding function chain may be obtained based on an identifier of the event, and the identifier of the event is written into the event executor, so that the event executor executes, based on the written identifier of the event and the corresponding function chain, a function triggered by the event. If a new event is published after the function triggered by the event is executed, the event identifier variable of the event executor may be updated based on an identifier of the new event, so that the event executor executes, based on an updated event identifier variable and a corresponding function chain, a function triggered by the new event, until all functions indicated by the function chain are executed.

Further, in this embodiment of this application, the service instance further supports in executing events in one session in a serial manner, and executing events in different sessions in a parallel manner. Specifically, each service instance may further include a plurality of FaaS instances, where the FaaS instance is a lower level of the service instance, and the plurality of FaaS instances have same execution logic, and may process, in a parallel manner, a plurality of events that are scheduled to the service instance. The service instance is equivalent to a process of the service, and the plurality of FaaS instances of the service instance are equivalent to a plurality of threads of the process. For the event that is scheduled to be executed in the target service instance, events belonging to a same session may be scheduled to be executed in a same FaaS instance in the target service instance, and events belonging to different sessions are scheduled to be executed in a same FaaS instance or different FaaS instances, to support serial execution of events in one session and parallel execution of events in different sessions, thereby further implementing serial and parallel coordination scheduling of the session events.

For example, referring to FIG 1M, it is assumed that the target service includes three service instances: a service instance 1, a service instance 2, and a service instance 3. The service instance 1 includes three FaaS instances: a FaaS instance 1, a FaaS instance 2, and a FaaS instance 3. Events that enter the target service include events belonging to a session 1, events belonging to a session 2, and events belonging to a session 3. In actual implementation, the events in the session 1 may be sequentially scheduled to the FaaS instance 1 for processing, the events in the session 2 may be sequentially scheduled to the FaaS instance 2 for processing, and the events in Session 3 may be sequentially scheduled to the FaaS instance 3 for processing. In this way, events in one session may be executed in a serial manner, and events in different sessions may be executed in a parallel manner.

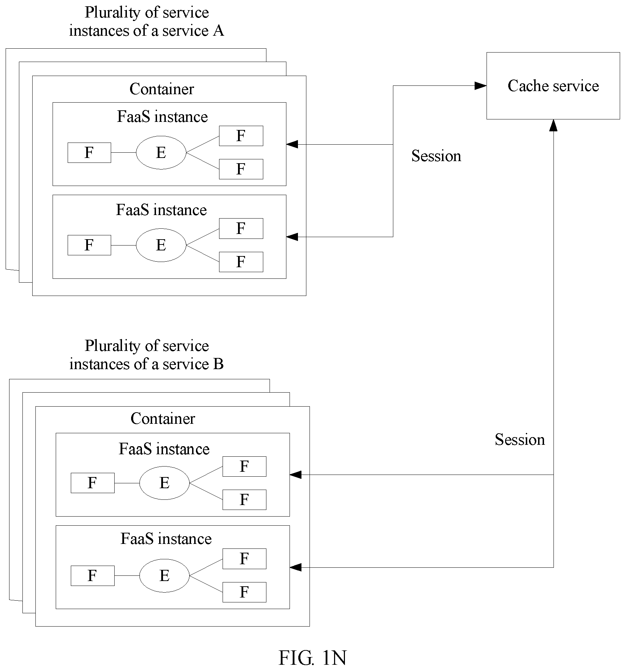

FIG 1N is a deployment relationship diagram of a service instance according to an embodiment of this application. As shown in FIG 1H, it is assumed that two services are deployed in a serverless architecture: a service A and a service B. A plurality of service instances may be set for the service A in a pre-allocated container, and a plurality of service instances may also be set for the service B in a pre-allocated container. Each service instance may include a plurality of FaaS instances, and is used to run a function chain included in a corresponding service. In addition, the serverless architecture may further include a cache service, and the cache service is used to cache a running status of the session.

In this embodiment of this application, a service is abstracted in a function-chain-based event driving manner, and can support efficient and fast scheduling of an event. For example, in an embodiment, it is assumed that there are 1000 sessions, and each session has five events, the 1000 sessions have 5000 events in total. If the 5000 events trigger 18 function chains in total, according to the event driving method provided in this application, total duration for processing all the 5000 events is less than 40 ms, and average duration for processing each event is less than 8 µs. Scheduling duration of each function in the function chain is also measured in a unit of µs, and performance is very similar to that of directly scheduling a function, thereby greatly improving system performance.

The following Table 1 is a performance comparison table between a queue-based event driving instance provided in the related technology and a function-chain-based event driving instance provided in this embodiment of this application. As shown in Table 1, the queue-based event driving instance can support concurrency of only 1000 sessions, and the function-chain-based event driving instance can support concurrency of tens of millions of sessions, so as to greatly improve concurrency. In addition, an execution latency of the queue-based event driving instance is 200 ms, and an execution latency of the function-chain-based event driving instance may be less than 10 µs, so as to greatly shorten an execution latency, and improve system performance.

**Table 1**

| | Queue-based event driving | Function-chain-based event driving |
|---|---|---|
| Running model | Running in a container, where one event is corresponding to one container | Running level-2 scheduling, including a micro-service instance and a FaaS instance (process/thread) |
| Concurrency | 1000 sessions (a success rate decreases if there are more than 1000 sessions) | A single service instance supports concurrency of tens of thousands of sessions, and an entire system supports concurrency of tens of millions of sessions |
| Execution latency | 200 ms | < 10 µs |

In this embodiment of this application, the plurality of services may be deployed in the serverless architecture. Each service includes at least one function chain. Each function chain is used to indicate a plurality of functions that can be sequentially triggered. When the target event that is for the target service and that is published by the event source is received, the target function chain corresponding to the target event may be determined from at least one function chain included in the target service, and then the plurality of functions that can be sequentially triggered and that are indicated by the target function chain are executed by using the target service, to complete driving the target event. In other words, in the serverless architecture provided in this application, an event may directly trigger an entire function chain by using a service, so that driving is performed in a form of a function chain, thereby avoiding a queue procedure of an intermediate event that is triggered when driving is performed in a form of a function, reducing execution duration of a function, shortening a latency of a service processing procedure, and improving system performance.

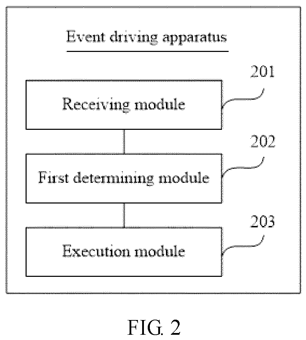

FIG 2 is a schematic structural diagram of an event driving apparatus according to an embodiment of this application. The event driving apparatus is applied to a serverless architecture, a plurality of services are deployed in the serverless architecture, each service includes at least one function chain, each function chain is used to indicate a plurality of functions that can be sequentially triggered, and each function chain is pre-determined based on a trigger relationship between an event and a function. The apparatus includes a receiving module 201, a first determining module 202, and an execution module 203.

The receiving module 201 is configured to perform the operation performed in step 103 in the embodiment shown in FIG 1E.

The first determining module 202 is configured to perform the operation performed in step 104 in the embodiment shown in FIG 1E.

The execution module 203 is configured to perform the operation performed in step 105 in the embodiment shown in FIG 1E.

Optionally, the apparatus further includes an obtaining module, a second determining module, and an allocation module.

The obtaining module is configured to perform the operation performed in step 101 in the embodiment shown in FIG 1E.

The second determining module and the allocation module are configured to perform the operation performed in step 102 in the embodiment shown in FIG 1E.

Optionally, the target event carries an identifier of the target event. The first determining module 202 is specifically configured to execute the first implementation or the second implementation described in step 104 in the embodiment shown in FIG 1E.

Optionally, the execution module 203 includes:
a determining unit, configured to determine a target service instance from at least one service instance configured for the target service, where each of the at least one service instance is used to run the target service; and
an execution unit, configured to execute, in the target service instance, the plurality of functions that can be sequentially triggered and that are indicated by the target function chain.

Optionally, the target event carries the identifier of the target event, the target service instance includes an event executor, and the event executor is configured to execute a function chain. The execution unit is specifically configured to:
load the target function chain into the target service instance;
write the identifier of the target event into the event executor;
execute, by using the event executor based on the identifier of the target event and the target function chain loaded into the target service instance, a function triggered by the target event; and
when it is detected that a new event is published after the function triggered by the target event is executed by using the event executor, update the identifier of the target event that is written into the event executor to an identifier of the new event, and execute, by using the event executor based on the identifier of the new event and the target function chain loaded into the target service instance, a function triggered by the new event, until all functions included in the target function chain are executed by using the event executor.

Optionally, the target function chain includes pointers of the plurality of functions that can be sequentially triggered, and the pointers are used to indicate storage addresses of the plurality of functions that can be sequentially triggered; and
the execution unit is specifically configured to:
obtain, based on the identifier of the target event from the pointers of the plurality of functions that can be sequentially triggered and that are included in the target function chain, a pointer of the function triggered by the target event; and
execute, by using the event executor based on the pointer of the function triggered by the target event, the function triggered by the target event.

Optionally, the execution unit is specifically configured to:
when the target event can trigger one function, determine, based on a pointer of the obtained function, a storage address of the function triggered by the target event; obtain, from the storage address, the function triggered by the target event; and execute, by using the event executor, the function triggered by the target event; or
when the target event can trigger a plurality of functions, push pointers of the obtained plurality of functions into a preset stack; and sequentially execute, by using the event executor based on a popping sequence of the pointers that are of the plurality of functions and that are pushed into the stack, the plurality of functions triggered by the target event.

Optionally, the target event carries an identifier of a session to which the target event belongs, and
the determining module is specifically configured to:
determine, based on the identifier of the session from the at least one service instance, a service instance that has executed a function triggered by an event belonging to the session; and
determine, as the target service instance, the service instance that has executed the function triggered by the event belonging to the session.

In this embodiment of this application, the plurality of services may be deployed in the serverless architecture. Each service includes at least one function chain. Each function chain is used to indicate a plurality of functions that can be sequentially triggered. When the target event that is for the target service and that is published by the event source is received, the target function chain corresponding to the target event may be determined from at least one function chain included in the target service, and then the plurality of functions that can be sequentially triggered and that are indicated by the target function chain are executed by using the target service, to complete driving the target event. In other words, in the serverless architecture provided in this application, an event may directly trigger an entire function chain by using a service, so that driving is performed in a form of a function chain, thereby avoiding a queue procedure of an intermediate event that is triggered when driving is performed in a form of a function, reducing execution duration of a function, shortening a latency of a service processing procedure, and improving system performance.

It should be noted that when the event driving apparatus provided in the foregoing embodiments is performing event driving, only division of the foregoing function modules is taken as an example for illustration. In actual application, the foregoing functionalities can be allocated to different function modules and implemented as required, in other words, an inner structure of an apparatus is divided into different function modules to implement all or part of the functionalities described above. In addition, the event driving apparatus provided in the foregoing embodiment pertains to a same concept as the event driving method embodiment. For a specific implementation process, refer to the method embodiment. Details are not described herein again.

In another embodiment, a computer-readable storage medium is further provided. The computer-readable storage medium stores an instruction. When the instruction is run on a computer, the computer performs the event driving method in the embodiment shown in FIG 1E.

In another embodiment, a computer program product that includes an instruction is further provided. When the instruction is run on a computer, the computer performs the event driving method in the embodiment shown in FIG 1E.

All or some of the foregoing embodiments may be implemented through software, hardware, firmware, or any combination thereof. When software is used to implement the embodiments, the embodiments may be implemented completely or partially in a form of a computer program product. The computer program product includes one or more computer instructions. When the computer instructions are loaded and executed on the computer, the procedure or functionalities according to the embodiments of this application are all or partially generated. The computer may be a general-purpose computer, a dedicated computer, a computer network, or other programmable apparatuses. The computer instructions may be stored in a computer-readable storage medium or may be transmitted from one computer-readable storage medium to another computer-readable storage medium. For example, the computer instructions may be transmitted from one website, computer, server, or data center to another website, computer, server, or data center in a wired (for example, a coaxial cable, an optical fiber, or a digital subscriber line (Digital Subscriber Line, DSL)) or wireless (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a digital versatile disc (Digital Versatile Disc, DVD)), a semiconductor medium (for example, a solid state drive (Solid State Disk, SSD)), or the like.

A person of ordinary skill in the art may understand that all or some of the steps of the embodiments may be implemented by hardware or a program instructing related hardware. The program may be stored in a computer-readable storage medium. The storage medium may include: a read-only memory, a magnetic disk, or an optical disc.

The foregoing descriptions are merely embodiments of this application, but are not intended to limit this application. The invention is defined by the appended claims.

## Claims

1. An event driving method performed by an event driving apparatus, the method comprising the steps of:
• receiving ( 103) a target event for a target service, wherein the target event is published by an event source, and the target service is one of a plurality of services deployed in a serverless architecture, each of the plurality of services comprises at least one function chain, the function chain indicates a plurality of functions that are sequentially triggered, and the function chain is pre-determined based on a trigger relationship between an event and a function, and the event source is a client or another service in the plurality of services except the target service;
• determining ( 104), from at least one function chain comprised in the target service, a target function chain corresponding to the target event; and
• executing ( 105), by using the target service, a plurality of functions that are sequentially triggered and that are indicated by the target function chain, to complete driving the target event, wherein the executing (105), by using the target service, the plurality of functions that are sequentially triggered and that are indicated by the target function chain comprises:
∘ determining a target service instance from at least one service instance configured for the target service, wherein each of the at least one service instance is used to run the target service; and
∘ executing, in the target service instance, the plurality of functions that are sequentially triggered and that are indicated by the target function chain, wherein the target event carries the identifier of the target event, the target service instance comprises an event executor, and the event executor is used to execute a function chain, and
the executing (105), in the target service instance, the plurality of functions that are sequentially triggered and that are indicated by the target function chain comprises:
▪ loading the target function chain into the target service instance;
▪ writing the identifier of the target event into the event executor;
▪ executing, by using the event executor based on the identifier of the target event and the target function chain loaded into the target service instance, a function triggered by the target event; and
▪ when it is detected that a new event is published after the function triggered by the target event is executed by using the event executor:
∘ updating the identifier of the target event that is written into the event executor to an identifier of the new event,
∘ loading a new target function chain corresponding to the new event into the target service instance, and
∘ executing, by using the event executor based on the identifier of the new event and the new target function chain loaded into the target service instance, a function triggered by the new event until all functions comprised in the new target function chain are executed by using the event executor.

2. The method according to claim 1, wherein before the determining (104), from at least one function chain comprised in the target service, the target function chain corresponding to the target event, the method further comprises:
• obtaining ( 101) a plurality of functions, a plurality of events, and an event-function relationship diagram, wherein the event-function relationship diagram is used to indicate a trigger relationship between the obtained plurality of functions and the obtained plurality of events;
• determining ( 102), based on an affinity relationship between the obtained plurality of functions, a plurality of specified functions that meet an affinity condition in the obtained plurality of functions; and
• allocating ( 102), to the target service, at least one function chain that is formed by using identifiers of the plurality of specified functions based on the event-function relationship diagram.

3. The method according to claim 1 or 2, wherein the target event carries an identifier of the target event; and
the determining (104), from at least one function chain comprised in the target service, the target function chain corresponding to the target event comprises:
• determining, based on the identifier of the target event and a stored trigger relationship between an event and a function, a target function triggered by the target event; determining, from the at least one function chain comprised in the target service, a function chain starting from the target function; and determining the function chain starting from the target function as the target function chain; or
• determining, based on the identifier of the target event and a stored correspondence between an event identifier and a function chain, the target function chain corresponding to the target event from the at least one function chain comprised in the target service.

4. The method according to any one of claims 1 to 3, wherein the target function chain comprises pointers of the plurality of functions that are sequentially triggered, and the pointers are used to indicate storage addresses of the plurality of functions that are sequentially triggered; and
the executing (105), by using the event executor based on the identifier of the target event and the target function chain loaded into the target service instance, the function triggered by the target event comprises:
• obtaining, based on the identifier of the target event from the pointers of the plurality of functions that are sequentially triggered and that are comprised in the target function chain, a pointer of the function triggered by the target event; and
• executing, by using the event executor based on the pointer of the function triggered by the target event, the function triggered by the target event.

5. The method according to any one of claims 1 to 4, wherein the executing (105), by using the event executor based on the pointer of the function triggered by the target event, the function triggered by the target event comprises:
• when the target event triggers one function, determining, based on a pointer of the obtained function, a storage address of the function triggered by the target event; obtaining, from the storage address, the function triggered by the target event; and executing, by using the event executor, the function triggered by the target event; or
• when the target event triggers a plurality of functions, pushing pointers of the obtained plurality of functions into a preset stack; and sequentially executing, by using the event executor based on a popping sequence of the pointers that are of the plurality of functions and that are pushed into the stack, the plurality of functions triggered by the target event.

6. The method according to any one of claims 1 to 5, wherein the target event carries an identifier of a session to which the target event belongs, and
the determining the target service instance from at least one service instance configured for the target service comprises:
• determining, based on the identifier of the session from the at least one service instance, a service instance that has executed a function triggered by an event belonging to the session; and
• determining, as the target service instance, the service instance that has executed the function triggered by the event belonging to the session.

7. An event driving apparatus configured to perform any of the methods according to claims 1-6.

## Patentansprüche

1. Verfahren zur Ereignissteuerung, das durch eine Ereignissteuerungsvorrichtung durchgeführt wird, wobei das Verfahren die folgenden Schritte umfasst:
• Empfangen (103) eines Zielereignisses für einen Zieldienst, wobei das Zielereignis von einer Ereignisquelle veröffentlicht wird und der Zieldienst einer von einer Vielzahl von Diensten ist, die in einer serverlosen Architektur eingesetzt werden, wobei jeder der Vielzahl von Diensten mindestens eine Funktionskette umfasst, wobei die Funktionskette Vielzahl von Funktionen angibt, die nacheinander ausgelöst werden, und wobei die Funktionskette basierend auf einer Auslösebeziehung zwischen einem Ereignis und einer Funktion vorgegeben ist und wobei die Ereignisquelle ein Client oder ein anderer Dienst in der Vielzahl von Diensten mit Ausnahme des Zieldienstes ist;
• Bestimmen (104) einer Zielfunktionskette, die dem Zielereignis entspricht, aus mindestens einer im Zieldienst enthaltenen Funktionskette; und
• Ausführen (105) einer Vielzahl von Funktionen unter Verwendung des Zieldienstes, die sequenziell ausgelöst werden und die durch die Zielfunktionskette angegeben werden, um das Auslösen des Zielereignisses abzuschließen, wobei das Ausführen (105) unter Verwendung des Zieldienstes der Vielzahl von Funktionen, die sequenziell ausgelöst werden und die durch die Zielfunktionskette angegeben werden, Folgendes umfasst:
∘ Bestimmen einer Zieldienstinstanz aus mindestens einer für den Zieldienst konfigurierten Dienstinstanz, wobei jede der mindestens einen Dienstinstanz zum Ausführen des Zieldienstes verwendet wird; und
∘ Ausführen der Vielzahl von Funktionen in der Zieldienstinstanz, die nacheinander ausgelöst werden und durch die Zielfunktionskette angegeben werden, wobei das Zielereignis die Kennung des Zielereignisses trägt, die Zieldienstinstanz einen Ereignisausführer umfasst und der Ereignisausführer zum Ausführen einer Funktionskette verwendet wird, und
das Ausführen (105) der Vielzahl von Funktionen, die sequenziell ausgelöst werden und die durch die Zielfunktionskette angegeben werden, in der Zieldienstinstanz Folgendes umfasst:
▪ Laden der Zielfunktionskette in die Zieldienstinstanz;
▪ Schreiben der Kennung des Zielereignisses in den Ereignisausführer;
▪ Ausführen einer durch das Zielereignis ausgelösten Funktion unter Verwendung des Ereignisausführers basierend auf der Kennung des Zielereignisses und der in die Zieldienstinstanz geladenen Zielfunktionskette; und
▪ wenn erkannt wird, dass ein neues Ereignis veröffentlicht wird, nachdem die durch das Zielereignis ausgelöste Funktion mithilfe des Ereignisausführers ausgeführt wurde:
∘ Aktualisieren der Kennung des Zielereignisses, die in den Ereignisausführer geschrieben wird, auf eine Kennung des neuen Ereignisses,
∘ Laden einer neuen Zielfunktionskette, die dem neuen Ereignis entspricht, in die Zieldienstinstanz und
∘ Ausführen einer durch das neue Ereignis ausgelösten Funktion unter Verwendung des Ereignisausführers basierend auf der Kennung des neuen Ereignisses und der neuen Zielfunktionskette, die in die Zieldienstinstanz geladen wurde, bis alle in der neuen Zielfunktionskette enthaltenen Funktionen unter Verwendung des Ereignisausführers ausgeführt wurden.

2. Verfahren nach Anspruch 1, wobei vor dem Bestimmen (104) der dem Zielereignis entsprechenden Zielfunktionskette aus mindestens einer im Zieldienst enthaltenen Funktionskette das Verfahren ferner Folgendes umfasst:
• Erlangen (101) einer Vielzahl von Funktionen, einer Vielzahl von Ereignissen und eines Ereignis-Funktions-Beziehungsdiagramms, wobei das Ereignis-Funktions-Beziehungsdiagramm verwendet wird, um eine Auslösebeziehung zwischen der erlangten Vielzahl von Funktionen und der erlangten Vielzahl von Ereignissen anzugeben;
• Bestimmen (102), basierend auf einer Affinitätsbeziehung zwischen der erlangten Vielzahl von Funktionen, einer Vielzahl von festgelegten Funktionen, die eine Affinitätsbedingung in der erlangten Vielzahl von Funktionen erfüllen; und
• Zuweisen (102) von mindestens einer Funktionskette zu dem Zieldienst, die durch Verwenden von Kennungen der Vielzahl von angegebenen Funktionen basierend auf dem Ereignis-Funktions-Beziehungsdiagramm gebildet wird.

3. Verfahren nach Anspruch 1 oder 2, wobei das Zielereignis eine Kennung des Zielereignisses trägt; und
das Bestimmen (104) einer Zielfunktionskette, die dem Zielereignis entspricht, aus mindestens einer im Zieldienst enthaltenen Funktionskette Folgendes umfasst:
• Bestimmen einer durch das Zielereignis ausgelösten Zielfunktion basierend auf der Kennung des Zielereignisses und einer gespeicherten Auslösebeziehung zwischen einem Ereignis und einer Funktion; Bestimmen einer von der Zielfunktion ausgehenden Funktionskette aus der mindestens einen im Zieldienst enthaltenen Funktionskette; und Bestimmen der von der Zielfunktion ausgehenden Funktionskette als Zielfunktionskette; oder
• Bestimmen der dem Zielereignis entsprechenden Zielfunktionskette aus der mindestens einen im Zieldienst enthaltenen Funktionskette basierend auf der Kennung des Zielereignisses und einer gespeicherten Entsprechung zwischen einer Ereigniskennung und einer Funktionskette.

4. Verfahren nach einem der Ansprüche 1 bis 3, wobei die Zielfunktionskette Zeiger der Vielzahl von Funktionen umfasst, die nacheinander ausgelöst werden, und die Zeiger verwendet werden, um Speicheradressen der Vielzahl von Funktionen anzugeben, die nacheinander ausgelöst werden; und
das Ausführen (105) der durch das Zielereignis ausgelösten Funktion unter Verwendung des Ereignisausführers basierend auf der Kennung des Zielereignisses und der in die Zieldienstinstanz geladenen Zielfunktionskette Folgendes umfasst:
• Erlangen eines Zeigers der durch das Zielereignis ausgelösten Funktion basierend auf der Kennung des Zielereignisses aus den Zeigern der Vielzahl von Funktionen, die nacheinander ausgelöst werden und die in der Zielfunktionskette enthalten sind; und
• Ausführen der durch das Zielereignis ausgelösten Funktion unter Verwendung des Ereignisausführers basierend auf dem Zeiger der durch das Zielereignis ausgelösten Funktion.

5. Verfahren nach einem der Ansprüche 1 bis 4, wobei das Ausführen (105) der durch das Zielereignis ausgelösten Funktion unter Verwendung des Ereignisausführers basierend auf dem Zeiger der durch das Zielereignis ausgelösten Funktion Folgendes umfasst:
• wenn das Zielereignis eine Funktion auslöst, Bestimmen einer Speicheradresse der durch das Zielereignis ausgelösten Funktion basierend auf einem Zeiger der erlangten Funktion; Erlangen der durch das Zielereignis ausgelösten Funktion aus der Speicheradresse; und Ausführen der durch das Zielereignis ausgelösten Funktion unter Verwendung des Ereignisausführers; oder
• wenn das Zielereignis eine Vielzahl von Funktionen auslöst, Schieben von Zeigern der erlangten Vielzahl von Funktionen in einen voreingestellten Stapel; und sequenzielles Ausführen der Vielzahl von Funktionen, die durch das Zielereignis ausgelöst wurden, unter Verwendung des Ereignisausführers basierend auf einer Popper-Sequenz der Zeiger, die zu der Vielzahl von Funktionen gehören und in den Stapel geschoben wurden.

6. Verfahren nach einem der Ansprüche 1 bis 5, wobei das Zielereignis eine Kennung einer Sitzung trägt, der das Zielereignis angehört, und
das Bestimmen der Zieldienstinstanz aus mindestens einer für den Zieldienst konfigurierten Dienstinstanz umfasst:
• Bestimmen einer Dienstinstanz, die eine durch ein der Sitzung angehörendes Ereignis ausgelöste Funktion ausgeführt hat, basierend auf der Kennung der Sitzung von der mindestens einen Dienstinstanz; und
• Bestimmen der Dienstinstanz als Zieldienstinstanz, welche die durch das der Sitzung angehörende Ereignis ausgelöste Funktion ausgeführt hat.

7. Ereignissteuerungssvorrichtung, die dazu konfiguriert ist, eines der Verfahren nach den Ansprüchen 1 bis 6 durchzuführen.

## Revendications

1. Procédé de conduite d'événement réalisé par un appareil de conduite d'événement, le procédé comprenant les étapes :
• de réception (103) d'un événement cible pour un service cible, dans lequel l'événement cible est publié par une source d'événement, et le service cible est l'un d'une pluralité de services déployés dans une architecture sans serveur, chacun de la pluralité de services comprend au moins une chaîne de fonctions, la chaîne de fonctions indique une pluralité de fonctions qui sont déclenchées séquentiellement, et la chaîne de fonctions est prédéterminée sur la base d'une relation de déclenchement entre un événement et une fonction, et la source d'événement est un client ou un autre service parmi la pluralité de services à l'exception du service cible ;
• de détermination (104), à partir d'au moins une chaîne de fonctions comprise dans le service cible, d'une chaîne de fonctions cible correspondant à l'événement cible ; et
• d'exécution (105), à l'aide du service cible, d'une pluralité de fonctions qui sont déclenchées séquentiellement et qui sont indiquées par la chaîne de fonctions cible, pour terminer la conduite de l'événement cible, dans lequel l'exécution (105), à l'aide du service cible, de la pluralité de fonctions qui sont déclenchées séquentiellement et qui sont indiquées par la chaîne de fonctions cible comprend :
∘ la détermination d'une instance de service cible à partir d'au moins une instance de service configurée pour le service cible, dans lequel chacune de l'au moins une instance de service est utilisée pour exécuter le service cible ; et
∘ l'exécution, dans l'instance de service cible, de la pluralité de fonctions qui sont déclenchées séquentiellement et qui sont indiquées par la chaîne de fonctions cible, dans lequel l'événement cible porte l'identifiant de l'événement cible, l'instance de service cible comprend un exécuteur d'événement, et l'exécuteur d'événement est utilisé pour exécuter une chaîne de fonctions, et
l'exécution (105), dans l'instance de service cible, de la pluralité de fonctions qui sont déclenchées séquentiellement et qui sont indiquées par la chaîne de fonctions cible comprend :
▪ le chargement de la chaîne de fonctions cible dans l'instance de service cible ;
▪ l'écriture de l'identifiant de l'événement cible dans l'exécuteur d'événement ;
▪ l'exécution, à l'aide de l'exécuteur d'événement sur la base de l'identifiant de l'événement cible et de la chaîne de fonctions cible chargée dans l'instance de service cible, d'une fonction déclenchée par l'événement cible ; et
▪ lorsqu'il est détecté qu'un nouvel événement est publié après l'exécution de la fonction déclenchée par l'événement cible à l'aide de l'exécuteur d'événement :
∘ la mise à jour de l'identifiant de l'événement cible qui est écrit dans l'exécuteur d'événement vers un identifiant du nouvel événement,
∘ le chargement d'une nouvelle chaîne de fonctions cible correspondant au nouvel événement dans l'instance de service cible, et
∘ l'exécution, à l'aide de l'exécuteur d'événement sur la base de l'identifiant du nouvel événement et de la nouvelle chaîne de fonctions cible chargée dans l'instance de service cible, d'une fonction déclenchée par le nouvel événement jusqu'à ce que toutes les fonctions comprises dans la nouvelle chaîne de fonctions cible soient exécutées à l'aide de l'exécuteur d'événement.

2. Procédé selon la revendication 1, dans lequel avant la détermination (104), parmi au moins une chaîne de fonctions comprise dans le service cible, de la chaîne de fonctions cible correspondant à l'événement cible, le procédé comprend également :
• l'obtention (101) d'une pluralité de fonctions, d'une pluralité d'événements et d'un diagramme de relation événement-fonction, dans lequel le diagramme de relation événement-fonction est utilisé pour indiquer une relation de déclenchement entre la pluralité de fonctions obtenues et la pluralité d'événements obtenus ;
• la détermination (102), sur la base d'une relation d'affinité entre la pluralité de fonctions obtenues, d'une pluralité de fonctions spécifiées qui satisfont une condition d'affinité dans la pluralité de fonctions obtenues ; et
• l'attribution (102), au service cible, d'au moins une chaîne de fonctions qui est formée à l'aide des identifiants de la pluralité de fonctions spécifiées sur la base du diagramme de relation événement-fonction.

3. Procédé selon la revendication 1 ou 2, dans lequel l'événement cible porte un identifiant de l'événement cible ; et
la détermination (104), à partir d'au moins une chaîne de fonctions comprise dans le service cible, d'une chaîne de fonctions cible correspondant à l'événement cible comprend :
• la détermination, sur la base de l'identifiant de l'événement cible et d'une relation de déclenchement stockée entre un événement et une fonction, d'une fonction cible déclenchée par l'événement cible ; la détermination, à partir de l'au moins une chaîne de fonctions comprise dans le service cible, d'une chaîne de fonctions commençant à partir de la fonction cible ; et la détermination de la chaîne de fonctions à partir de la fonction cible en tant que chaîne de fonctions cible ; ou
• la détermination, sur la base de l'identifiant de l'événement cible et d'une correspondance stockée entre un identifiant d'événement et une chaîne de fonctions, de la chaîne de fonctions cible correspondant à l'événement cible à partir de l'au moins une chaîne de fonctions comprise dans le service cible.

4. Procédé selon l'une quelconque des revendications 1 à 3, dans lequel la chaîne de fonctions cible comprend des pointeurs de la pluralité de fonctions déclenchées séquentiellement, et les pointeurs sont utilisés pour indiquer des adresses de stockage de la pluralité de fonctions déclenchées séquentiellement ; et l'exécution (105), à l'aide de l'exécuteur d'événement sur la base de l'identifiant de l'événement cible et de la chaîne de fonctions cible chargée dans l'instance de service cible, de la fonction déclenchée par l'événement cible comprend :
• l'obtention, sur la base de l'identifiant de l'événement cible à partir des pointeurs de la pluralité de fonctions qui sont déclenchées séquentiellement et qui sont comprises dans la chaîne de fonctions cible, d'un pointeur de la fonction déclenchée par l'événement cible ; et
• l'exécution, à l'aide de l'exécuteur d'événement sur la base du pointeur de la fonction déclenchée par l'événement cible, de la fonction déclenchée par l'événement cible.

5. Procédé selon l'une quelconque des revendications 1 à 4, dans lequel l'exécution (105), à l'aide de l'exécuteur d'événement sur la base du pointeur de la fonction déclenchée par l'événement cible, de la fonction déclenchée par l'événement cible comprend :
• lorsque l'événement cible déclenche une fonction, la détermination, sur la base d'un pointeur de la fonction obtenue, d'une adresse de stockage de la fonction déclenchée par l'événement cible ; l'obtention, à partir de l'adresse de stockage, de la fonction déclenchée par l'événement cible ; et l'exécution, à l'aide de l'exécuteur d'événement, de la fonction déclenchée par l'événement cible ; ou
• lorsque l'événement cible déclenche une pluralité de fonctions, l'introduction des pointeurs de la pluralité de fonctions obtenues dans une pile prédéfinie ; et l'exécution séquentielle, à l'aide de l'exécuteur d'événement sur la base d'une séquence d'apparition des pointeurs qui font partie de la pluralité de fonctions et qui sont poussés dans la pile, de la pluralité de fonctions déclenchées par l'événement cible.

6. Procédé selon l'une quelconque des revendications 1 à 5, dans lequel l'événement cible porte un identifiant d'une session à laquelle appartient l'événement cible, et
la détermination de l'instance de service cible à partir d'au moins une instance de service configurée pour le service cible comprend :
• la détermination, sur la base de l'identifiant de la session à partir de l'au moins une instance de service, d'une instance de service qui a exécuté une fonction déclenchée par un événement appartenant à la session ; et
• la détermination, comme instance de service cible, de l'instance de service qui a exécuté la fonction déclenchée par l'événement appartenant à la session.

7. Appareil de conduite d'événement configuré pour réaliser l'un quelconque des procédés selon les revendications 1 à 6.
